# EUROPÄISCHE PATENTANMELDUNG

(11) **EP 2 777 783 A1**
(43) Veröffentlichungstag der Anmeldung: **17.09.2014**
(21) Anmeldenummer: 13001282.6
(22) Anmeldetag: 13.03.2013
(51) Int. Cl.: A63C 17/12, A63C 17/01

(54) **Pedalloses Tretfahrzeug mit Trethilfe**

(71) Anmelder: Violonchi, Ralf, 47906 Kempen (DE)
(72) Erfinder: Violonchi, Ralf, 47906 Kempen (DE)
(74) Vertreter: Castell, Klaus

(57) **Zusammenfassung**

Die Erfindung betrifft ein pedalloses Tretfahrzeug.

Erfindungsgemäß ist vorgesehen, dass eine elektrische Trethilfe in Form eines elektrischen Hilfsantriebes (3) vorgesehen ist, der sich selbsttätig nur für eine vorbestimmte Zeit mit einer vorbestimmten Leistungsabgabe zur Antriebshilfe dazuschaltet.

Dadurch wird das Antreten erleichtert und der Fahrspaß erhöht. Des Weiteren kann sich der Fahrer während der Unterstützung durch den elektrischen Hilfsantriebes erholen.

## Beschreibung

Die Erfindung betrifft ein pedalloses Tretfahrzeug.

Pedalloses Tretfahrzeuge, wie Skateboards, Roller, Kickboards, Roller-Skates (Rollschuhe) und Roller-Blades, Inline-Skater (Rollschuhe mit Rädern auf einer Linie) oder ähnliche Fahrzeuge, die keinen Pedalantrieb aufweisen, sondern durch den Nutzer durch Abstoßen am Untergrund in Fahrt gesetzt werden, weisen in der Regel keinen externen oder zusätzlichen Kraftantrieb auf. Davon ausgenommen sind beispielsweise Skateboards und Kickboards, die mit einem Verbrennungsmotor oder mit einem elektrischen Hilfsmotor ausgerüstet sind und so einen dauerhaft angetrieben Zustand einnehmen können. Motorgetriebene, pedallose Fahrzeuge sind in der Regel nicht zulassungsfähig auf öffentlichen Straßen. Daher werden diese als Sportgeräte auf privatem Gelände genutzt.

Neben den pedallosen Fahrzeugen sind Fahrzeuge mit Pedalantrieb bekannt, wie beispielsweise das Fahrrad, Dreirad, Tandem oder auch vierrädrige Fahrzeuge. Bei pedallosen Fahrzeugen ist es bekannt, einen Hilfsmotor einzusetzen, der das ansonsten mit Pedalen durch den Nutzer angetriebene Fahrzeug beim Antrieb unterstützt. Neben dem permanenten Antrieb sind auch beispielsweise Fahrräder bekannt, die nur während des aktiven Pedaltretens dem Nutzer eine Unterstützung beim Antrieb des Fahrzeuges geben. Solche nur während der Abgabe von Eigenleistung unterstützende Fahrzeuge werden häufig "Pedelecs" genannt. Bei dieser Art von meist elektrisch unterstützten Fahrzeugen sind verschiedene Betriebsmodi bekannt. In Europa sind Pedelecs zulassungsfähig, die einen permanenten Antrieb leisten, sofern die Geschwindigkeit 6 km/h nicht überschreitet. Im alternativen Betriebszustand der Tretunterstützung ist in der Regel eine Geschwindigkeitsbegrenzung auf 25 km/h vorgesehen. Daneben sind auch schnelle Pedelecs bekannt, die antriebsunterstützte Geschwindigkeiten bis zu 45 km/h erreichen können. Freilich ist es einem Nutzer freigestellt, noch schneller zu fahren, aber eine aktive Tretunterstützung ist aus sicherheitsrelevanten Gründen und aus Zulassungsaspekten nicht vorgesehen.

In der deutschen Gebrauchsmusterschrift DE202010004820U1 wird ein tragbares Antriebssystem für Tretroller oder Skateboards offenbart.

In der deutschen Offenlegungsschrift DE102009053973A1 wird ein Hilfsantrieb für mit Muskelkraft angetriebene Fahrzeuge offenbart. Dieser Hilfsantrieb soll über Reibmitteln seine Antriebsenergie auf die Räder des Fahrzeuges übertragen.

In der deutschen Offenlegungsschrift DE10130795A1 wir ein Hilfsantrieb für einen Tretroller offenbart, der nachträglich an der Vordergabel eines Tretrollers montiert werden kann.

In der deutschen Offenlegungsschrift DE4240439A1 wird ein Tretroller mit Hilfsmotor am Hinterrad offenbart, der mittels einer fußbedienten Kupplung zugeschaltet werden kann.

Der Erfindung liegt die Aufgabe zu Grunde, ein alternatives Fahrzeug mit elektrischem Hilfsantrieb zur Verfügung zu stellen.

Die der Erfindung zu Grunde liegende Aufgabe wird durch ein pedalloses Tretfahrzeug gelöst, das dadurch gekennzeichnet ist, dass eine elektrische Trethilfe in Form eines elektrischen Hilfsantriebes vorgesehen ist, der sich selbsttätig nur für eine vorbestimmte Zeit mit einer vorbestimmten Leistungsabgabe zur Antriebshilfe dazu schaltet. Dadurch wird das Antreten erleichtert und der Fahrspaß erhöht. Des Weiteren kann sich der Fahrer während der Unterstützung durch den elektrischen Hilfsantriebes erholen.

Das hier vorgestellte pedallose Tretfahrzeug unterscheidet sich von den angetriebenen pedallosen Tretfahrzeugen aus dem Stand der Technik durch den sich selbsttätig einschaltenden Hilfsantrieb, der sich nur für eine vorbestimmte Zeit mit einer vorbestimmten Leistungsabgabe zur Antriebshilfe dazu schaltet. Von bekannten Pedelecs als Fahrzeuge mit Pedal unterscheidet sich das pedallose Tretfahrzeug durch das stets nur zeitweise Einschalten des elektrischen Hilfsantriebes.

Je nach Ausgestaltung der Erfindung ist das auslösende Moment für das Dazuschalten mindestens einer der folgenden Mess- oder Detektionsparameter: a) die Änderung des aktuellen Drehmoments des elektrischen Hilfsantriebes, b) die Änderung des der aktuellen elektrischen Leistungsaufnahme des elektrischen Hilfsantriebes, c) die aktuelle Geschwindigkeit, d) die Änderung der aktuellen Beschleunigung, als das aktuelle Ruckmoment, das einen bestimmten Wert erreicht, e) die Detektion eines Antrittsvorganges durch den Fahrer.

Es ist also nach dem Gedanken der Erfindung vorgesehen, dass der elektrische Hilfsantrieb als ein Zusatzantrieb verstanden wird, der sich nur für eine vorbestimmte Zeit oder nur mit vorbestimmtem Drehmoment oder Leistungsabgabe zur Antriebshilfe dazu schaltet, und zwar genau dann, wenn mindestens einer der oben genannten Parameter einen bestimmten Wert erreicht hat oder positiv ist. Dabei kann der elektrische Hilfsantrieb für eine kurze Zeit nach dem muskelbetriebenen Antrieb durch einen Fahrer das pedallose Tretfahrzeug antreiben. Nach dem Wesen der Erfindung ist vorgesehen, dass der Nutzer den elektrischen Hilfsantrieb durch eigene, muskelbasierte Antriebsarbeit stets dazu schalten muss. Ohne muskelbasierte Antriebsarbeit geschieht kein Antrieb durch den elektrischen Hilfsantrieb, wobei die muskelbasierte Antriebsarbeit durch die oben genannten Parameter detektiert wird. Damit unterscheidet sich die Erfindung von den eingangs zitierten Hilfsantrieben in den eingangs genannten Druckschriften dadurch, dass ein Permanentantrieb, sofern dieser 6 km/h überschreitet, nicht vorgesehen ist. Nach dem Gedanken der Erfindung soll der elektrische Hilfsantrieb im Augenblick des Antretens und gegebenenfalls für eine vorbestimmte Zeit oder eine vorbestimmte Wegstrecke danach aktiv sein und so dem Nutzer den Antrieb auf Dauer erleichtern. Ist der Nutzer selbst nicht mehr aktiv, so wird durch eine entsprechende Motorregelung der Hilfsantrieb ausgeschaltet.

Für den elektrischen Hilfsantrieb eignen verschiedene Regelungskonzepte, von denen drei Hauptfunktionsweisen jeweils eines Regelungskonzeptes näher erläutert werden:
Eine erste Hauptfunktionsweise besteht in einem nur in einem Geschwindigkeitsfenster ausgelösten, vergleichsweise geringen Drehmoment des elektrischen Hilfsantriebes. Das Drehmoment ist mit ca. 20 bis 50 N, bevorzugt von 35 bis 45 N so bemessen, dass dieses nicht ausreicht, ein stehendes Skateboard mit Fahrer in Gang zu setzen, weil die Haftreibung des im Stand befindlichen pedallosen Tretfahrzeuges zu groß ist. Jedoch genügt dieses Drehmoment, im bewegten Zustand den Fahrer beim Antreten zu unterstützen.

Bei diesem Regelungskonzept wird eine Minderleistung des elektrischen Hilfsantriebes nur innerhalb eines bestimmten Geschwindigkeitsfensters, vorzugsweise zwischen 5 km/h und 25 km/h abgeben. Bei Stopp und Geschwindigkeiten unterhalb des Geschwindigkeitsfensters und bei Geschwindigkeiten oberhalb des Geschwindigkeitsfensters schaltet die Vorrichtung zur Motorregelung den elektrischen Hilfsantrieb aus. Die Minderleistung des elektrischen Hilfsantriebes reicht nicht, unter normalen Bedingungen eine Mindestgeschwindigkeit aufrecht zu erhalten.

Die erste Funktionsweise ist eine echte Leistungsregelung innerhalb eines Geschwindigkeitsfensters mit Limitierung der Leistungsabgabe des elektrischen Hilfsantriebes. Die Leistungsabgabe wird über das Drehmoment des elektrischen Hilfsantriebes und über die Geschwindigkeit des pedallosen Tretfahrzeuges gemessen. Alternativ zur echten Leistungsregelung kann auch ein Motor mit bauartbedingtem begrenzten Drehmoment eingesetzt werden, der entweder vollkommen ungeregelt ist oder eine Überlastsicherung aufweist, welche beispielsweise von Akkuschraubern bekannt ist.

Zur ersten Funktionsweise gehört das folgende Regelungskonzept: Das pedallose Tretfahrzeug weist eine Vorrichtung zur Motorregelung auf. Bei Detektion einer Mindestgeschwindigkeit von ca. 5 bis 6 km/h schaltet die Vorrichtung zur Motorregelung den elektrischen Hilfsantrieb ein und hält dabei ein vorbestimmtes Drehmoment des elektrischen Hilfsantriebes aufrecht. Bei einer vorgegebenen Maximalgeschwindigkeit von ca. 25 km/h schaltet die Vorrichtung zur Motorregelung den elektrischen Hilfsantrieb aus. Bei Unterschreitung einer vorgegebenen Maximalgeschwindigkeit von ca. 25 km/h schaltet die Vorrichtung zur Motorregelung den elektrischen Hilfsantrieb wieder ein und hält dabei ein vorbestimmtes Drehmoment des elektrischen Hilfsantriebes aufrecht. Bei Unterschreitung einer vorgegebenen Maximalgeschwindigkeit von ca. 5 km/h schaltet die Vorrichtung zur Motorregelung den elektrischen Hilfsantrieb wieder aus.

Ein zweite Hauptfunktionsweise eines Regelungskonzeptes zeichnet sich dadurch aus, dass sich bei einer Mindestgeschwindigkeit von ca. 5 bis 6 km/h der elektrische Hilfsantrieb einschaltet und bei Erreichen einer Geschwindigkeit von ca. 25 km/h wieder ausschaltet. Dabei gibt der elektrische Hilfsantrieb für eine vorbestimmte Hilfsantriebszeit von bis zu 40 s eine Leistung ab, die gerade genügt, die Anfangsgeschwindigkeit zu halten. Nach Ablauf der Hilfsantriebszeit schaltet sich der elektrische Hilfsantrieb aus. Sofern sich während der Hilfsantriebszeit die Geschwindigkeit erhöht, weil beispielsweise der Fahrer mit Muskelkraft angetreten hat, so erneuert sich die Hilfsantriebszeit, diesmal mit jedoch der erhöhten Anfangsgeschwindigkeit. Dies geschieht so lange bis die maximale Antriebsgeschwindigkeit von 25 km/h erreicht ist. Das pedallose Tretfahrzeug kann schneller Fahren, jedoch wird der elektrische Hilfsantrieb nicht wieder eingeschaltet, bis die Geschwindigkeit sich wieder unter 25 km/h befindet. In diesem Betriebszustand beschleunigt der Hilfsantrieb nicht. Der Hilfsantrieb hält die einmal durch muskelbasiertes Antreten erreichte Geschwindigkeit für eine vorbestimmte Zeit innerhalb derer der Fahrer sich für den nächsten Antritt erholen kann.

Bei diesem Regelungskonzept wird eine Minimalleistung des elektrischen Hilfsantriebes nur innerhalb eines bestimmten Geschwindigkeitsfensters, vorzugsweise zwischen 5 km/h und 25 km/h abgeben. Bei Stopp und Geschwindigkeiten unterhalb des Geschwindigkeitsfensters und bei Geschwindigkeiten oberhalb des Geschwindigkeitsfensters schaltet die Vorrichtung zur Motorregelung den elektrischen Hilfsantrieb aus. Die Minimalleistung des elektrischen Hilfsantriebes reicht gerade eben, unter normalen Bedingungen eine Mindestgeschwindigkeit aufrecht zu erhalten.

Die zweite Funktionsweise ist eine echte Leistungsregelung innerhalb eines Geschwindigkeitsfensters mit Limitierung der Zeit der Leistungsabgabe des elektrischen Hilfsantriebes. Die Leistungsabgabe wird über die Geschwindigkeit des pedallosen Tretfahrzeuges und über die Zeit gemessen.

Zur zweiten Hauptfunktionsweise gehört das folgende Regelungskonzept: Das pedallose Tretfahrzeug weist eine Vorrichtung zur Motorregelung auf. Bei einer vorgegebenen Mindestgeschwindigkeit startet die Vorrichtung zur Motorregelung einen Antriebszyklus. In dem Antriebszyklus schaltet die Vorrichtung zur Motorregelung einen elektrischen Hilfsantrieb für eine vorbestimmte Zeit ein und nach Ablauf der Zeit wieder aus. Innerhalb der eingeschalteten Zeit hält der elektrische Hilfsantrieb durch die Vorrichtung zur Motorregelung das Anfangsgeschwindigkeitsniveau aufrecht. Das Anfangsgeschwindigkeitsniveau ist die Geschwindigkeit beim Einschalten des elektrischen Hilfsantriebes.

Sofern sich die Geschwindigkeit des pedallosen Tretfahrzeuges während eines Antriebszyklus erhöht, wie beispielsweise durch ein Antreten durch den Fahrer, startet die Vorrichtung zur Motorregelung einen erneuten Antriebszyklus. Dieser erneute Antriebszyklus wird jedoch mit der erhöhten Anfangsgeschwindigkeit durchgeführt. Bei Erreichen einer vorgegebenen Maximalgeschwindigkeit des pedallosen Tretfahrzeuges schaltet die Motorsteuerung den Hilfsantrieb aus nicht wieder ein, solange die vorgegebene Maximalgeschwindigkeit überschritten ist.

Sofern sich die Geschwindigkeit erst nach Ablauf eines Antriebszyklus zunächst verringert, dann aber wieder erhöht, wie beispielsweise durch ein Antreten durch den Fahrer, nachdem der Hilfsantrieb ausgeschaltet wurde, startet die Vorrichtung zur Motorregelung einen erneuten Antriebszyklus. Dieser erneute Antriebszyklus wird jedoch mit der Geschwindigkeit durchgeführt, die nach der anfänglichen Verringerung der Geschwindigkeit vorlag.

Eine dritte Hauptfunktionsweise eines Regelungskonzeptes zeichnet sich aus durch das Detektieren von Antrittsschüben über das Detektieren von Stromaufnahme des Motors, über das Detektieren der Beschleunigung, über das Detektieren des Ruckmoments und/oder über das Detektieren eines an einem Sensor vorbeiziehenden Fußes. Bei jedem detektierten Antritt wird der elektrische Hilfsmotor dazu geschaltet und bis eine gemessene Geschwindigkeit des pedallosen Tretfahrzeuges eine vorbestimmte Geschwindigkeit erreicht hat, und/oder bis die Motorleistung des pedallosen Tretfahrzeuges einen vorbestimmten Wert erreicht hat. Bei Erreichen der vorbestimmten Geschwindigkeit und/oder der vorbestimmten Leistung des elektrischen Hilfsmotors wird die Leistung des elektrischen Hilfsantriebes gestoppt oder gemäß einem vorbestimmten Profils reduziert. Das Profil ist im einfachsten Fall ein Zeitablauf von bis zu 40 s. Ein anderes Profil ist die Verdoppelung der Wegstrecke, die vom pedallosen Tretfahrzeug zurückgelegt worden wäre, wenn der elektrische Hilfsantrieb nicht zugeschaltet worden wäre. Dabei wird die Wegstrecke in einem ersten Verfahren innerhalb einer Vorrichtung zur Regelung des elektrischen Hilfsantriebes rechnerisch über die Leistungsabgabe des elektrischen Hilfsantriebes ermittelt. Die messbaren Parameter Leistungsabgabe, Drehmoment, Geschwindigkeit und zurückgelegte Wegstrecke, die ihrerseits über Geschwindigkeit und abgelaufene Zeit ermittelt wird, erlauben einen rechnerischen Rückschluss über die Wegstrecke ohne elektrischen Hilfsantrieb. In einem zweiten Verfahren zur Ermittlung der Wegstrecke wird auf empirisch ermittelte Daten zurückgegriffen, wie eine Tabelle mit Geschwindigkeit und Zeit, die der elektrische Hilfsantrieb bei der Geschwindigkeit dazu geschaltet werden muss, um die Wegstrecke des pedallosen Tretfahrzeuges zu verdoppeln, zu verdreifachen, zu vervierfachen oder zu vervielfachen.

Bei diesem Regelungskonzept wird eine ausreichende Leistung abgegeben, die genügt, das pedallose Tretfahrzeug mit Fahrer zu beschleunigen. Die Leistungsabgabe findet nur für einen kurzen Zeitraum statt.

Die dritte Funktionsweise ist eine mittelbare Leistungsregelung, welche über die zurückgelegte Wegstrecke oder über die Zeit der Leistungsabgabe geschieht.

Zur dritten Hauptfunktionsweise gehört das folgende Regelungskonzept: Das pedallose Tretfahrzeug weist eine Vorrichtung zur Leistungsregelung eines elektrischen Hilfsantriebes auf. Diese Vorrichtung hat als Eingangsgröße die Stromaufnahme des elektrischen Hilfsantriebes und als Regelgröße die die Motorleistung des elektrischen Hilfsantriebes. Bei bei einer detektierten negativen Flanke der Stromaufnahme setzt die Vorrichtung zur Leistungsregelung die Motorleistung des elektrischen Hilfsantriebes herauf bis eine gemessene Geschwindigkeit des pedallosen Tretfahrzeuges eine vorbestimmte Geschwindigkeit erreicht hat, und/oder bis die Motorleistung des pedallosen Tretfahrzeuges einen vorbestimmten Wert erreicht hat. Bei Erreichen der vorbestimmten Geschwindigkeit und/oder der vorbestimmten Motorleistung reduziert die Vorrichtung zur Leistungsregelung die Motorleistung des elektrischen Hilfsmotors oder stoppt den elektrischen Hilfsmotor gemäß einem vorbestimmten Profil. Dabei ist das Profil durch eine Bremsbeschleunigung von weniger als 3 m/s² so bemessen, dass die Leistungsreduktion oder das Stoppen des Motors den Fahrer nicht aus dem Gleichgewicht bringt.

Zur dritten Hauptfunktionsweise gehört auch das folgende Regelungskonzept:
Das pedallose Tretfahrzeug weist eine Vorrichtung zur Detektion eines vorbeiziehenden Fußes auf, wobei der Fuß an der Stelle detektiert wird, wo dieser bei einem normalen Antrittsvorgang vorbeizieht. Bei Detektion eines vorbeiziehenden Fußes wird die Motorleistung des elektrischen Hilfsantriebes durch eine Vorrichtung zur Leistungsregelung heraufgesetzt bis eine gemessene Geschwindigkeit des pedallosen Tretfahrzeuges eine vorbestimmte Geschwindigkeit erreicht hat,
und/oder bis die Motorleistung des elektrischen Hilfsantriebes einen vorbestimmten Wert erreicht hat. Bei Erreichen der vorbestimmten Geschwindigkeit und/oder der vorbestimmten Motorleistung reduziert die Vorrichtung zur Leistungsregelung die Motorleistung des elektrischen Hilfsantriebes oder stoppt den elektrischen Hilfsantrieb gemäß einem vorbestimmten Profil. Dabei ist das Profil durch eine Bremsbeschleunigung von weniger als 3 m/s² so bemessen, dass die Leistungsreduktion oder das Stoppen des elektrischen Hilfsantriebes den Fahrer nicht aus dem Gleichgewicht bringt.

Zur dritten Hauptfunktionsweise gehört auch das folgende Reglungskonzept: Das pedallose Tretfahrzeug weist eine Vorrichtung zur Messung der Beschleunigung des pedallosen Tretfahrzeuges auf. Bei Detektion einer positiven Flanke der Beschleunigung, das bedeutet, das Ruckmoment (die differentielle Änderung der Beschleunigung nach der Zeit) ist positiv, wird die Motorleistung des elektrischen Hilfsantriebes heraufgesetzt bis eine gemessene Geschwindigkeit des pedallosen Tretfahrzeuges eine vorbestimmte Geschwindigkeit erreicht hat, und/oder bis die Motorleistung des elektrischen Hilfsantriebes einen vorbestimmten Wert erreicht hat. Bei Erreichen der vorbestimmten Geschwindigkeit und/oder der vorbestimmten Motorleistung reduziert die Vorrichtung zur Leistungsregelung die Motorleistung des elektrischen Hilfsantriebes oder stoppt den elektrischen Hilfsantrieb gemäß einem vorbestimmten Profil. Dabei ist das Profil durch eine Beschleunigung von weniger als 3 m/s² so bemessen, dass die Leistungsreduktion oder das Stoppen des Motors den Fahrer nicht aus dem Gleichgewicht bringt.

Nach der dritten Hauptfunktionsweise beschleunigt und bremst das pedallose Tretfahrzeug mitsamt Fahrer. Damit der Fahrer dabei auf dem pedallosen Tretfahrzeug balancieren kann, ohne dass das pedallose Tretfahrzeug nicht unter dem Fahrer hinwegfährt und dem Fahrer regelrecht die Beine unter dem Körper weg zieht, sind in den verschiedenen Unterstützungs- und Leistungsstufen je nach fahrerischem Können des Nutzers nicht nur die Leistungsabgabe, sondern auch der Anstieg der Leistungsabgabe während des Antretens und gegebenenfalls nach einem einzelnen Antritt gesteuert. Der Anstieg der Leistungsabgabe ist stets so gesteuert, dass keine Bremsbeschleunigung von mehr als 3 m/s² stattfindet.

In Ausgestaltung der Erfindung ist vorgesehen, dass bei Überschreiten einer vorbestimmten Geschwindigkeit eine Vorrichtung den elektrischen Hilfsantrieb in einen Generatorbetrieb umstellt und die abgegebene elektrische Leistung des Motors in eine an Bord befindliche Vorrichtung zur Speicherung elektrischen Stroms leitet. Dies hat den Vorteil, dass bei abschüssiger Fahrt oder bei stark muskelbasierter Beschleunigung des pedallosen Tretfahrzeuges der Akkumulator an Bord geladen wird.

In weiterer Ausgestaltung der Erfindung ist vorgesehen, dass ein Quickstopp in Form eines auf einer Standfläche vorhandenen Druckschalters vorgesehen ist, der bei Entlastung die Motorleistung des elektrischen Hilfsantriebes abrupt stoppt und in einen Bremsbetrieb umstellt. Dies hat den Vorteil, dass das pedallose Tretfahrzeug beispielsweise bei Sturz des Fahrers nicht ungebremst und ungesteuert beschleunigt und dabei möglicher Weise andere Passanten verletzt oder in den Straßenverkehr gerät.

Eine besondere Ausgestaltung des erfindungsgemäßen pedallosen Tretfahrzeuges weist als Besonderheit auf, dass eine Stufenschaltung vorgesehen ist, mit welcher der Grad der Tretunterstützung vorgewählt werden kann. Somit kann vom Fahrer eines der oben gewählten Regelungskonzepte gewählt werden, welche jeweils ein unterschiedliches fahrerisches Können erfordern. Zum Erlernen kann der Antrieb mit konstantem Drehmoment gewählt werden und für fortgeschrittene ist der Antrieb mit Beschleunigung attraktiv.

In weiterer, besonderer Ausgestaltung der Erfindung ist vorgesehen, dass eine kabelgebundene oder drahtlose Fernbedienung vorgesehen ist, mit welcher sowohl die Motorleistung des elektrischen Hilfsantriebes wie auch eine Bremse steuerbar ist. Die Fernbedienung lässt eine zusätzliche Regelung des Hilfsantriebes zu, um beispielsweise das Fahren mit dem Hilfsantrieb zu erlernen, aber auch, um das pedallose Tretfahrzeug während der bis zu 40 s dauernden Antriebsphase zu kontrollieren wie bei einem Permanentantrieb.

Für höhere Geschwindigkeiten ist in Weiterbildung der Erfindung vorgesehen, dass entweder eine rein mechanische, eine elektromechanische oder eine elektrisch unterstützte Hydraulikbremse vorgesehen ist. Die elektromechanische und auch die elektrisch unterstützte Hydraulikbremse ermöglicht ein kontrolliertes Bremsen beispielsweise über die Fernbedienung, aber auch um ein Bremsprofil nach einem Beschleunigungsvorgang kontrolliert zu gestalten, so dass dem Fahrer die Balance auf dem pedallosen Tretfahrzeug möglich ist.

Schließlich ist in weiterer Ausgestaltung der Erfindung vorgesehen, dass eine Vorrichtung zur Detektion des Straßenkontaktes zwischen mindestens einem Antriebsrad und dem Untergrund bei Verlust des mindestens einen Antriebsrades mit dem Untergrund den elektrischen Hilfsantrieb stromlos schaltet. Derartige Vorrichtungen sind aus der Automobilindustrie bekannt, welche beispielsweise für ein elektronisches Stabilitätsprogram (ESP) oder für ein Antiblockiersystem (ABS) oder für eine elektronische Anfahrkontrolle genutzt werden. Eine derartige Vorrichtung hilft, dass das pedallose Tretfahrzeug bei Sprüngen nicht sehr plötzlich das Antriebsrad beschleunigt und dabei durch Coriolis-Kräfte das pedallose Tretfahrzeug in der Luft kippt oder das pedallose Tretfahrzeug in der Luft aufheult.

Das pedallose Tretfahrzeug kann ein Skateboard, ein Roller, ein Kickboard, Roller-Skates (Rollschuhe), Roller-Blades oder Inline-Skater (Rollschuhe mit Rädern auf einer Linie) sein.

Die Erfindung wird anhand der folgenden Figuren näher erläutert.

Es zeigt:
- Figur 1: ein Skateboard mit erfindungsgemäßer elektrischer Trethilfe,
- Figur 2: ein 3-rädriger Tretroller mit elektrischer Trethilfe.

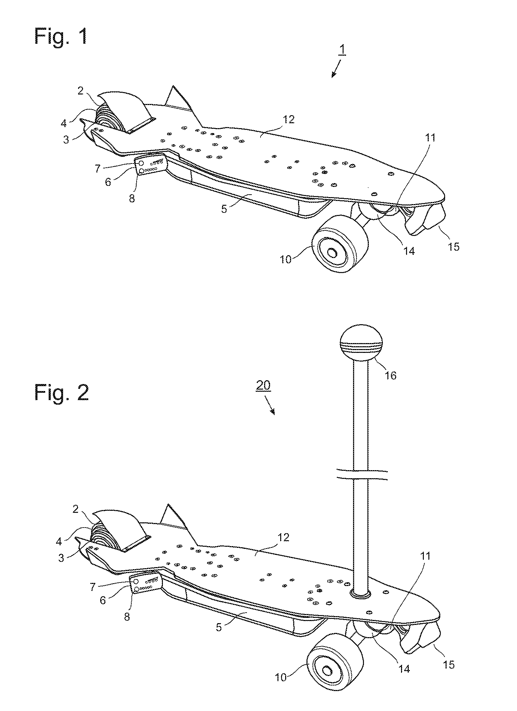

In Figur 1 ist eine erste Ausgestaltung eines pedallosen Tretfahrzeuges in Form eines elektrisch hilfsangetriebenen Skateboards 1 dargestellt. Dieses hilfsangetriebene Skateboard 1 ist als Dreirad aufgebaut, wobei das hintere Rad 2 in Form eines Nabenmotors 3 mit Gummiprofil 4 ausgebildet ist. Dieser Nabenmotor 3, der bevorzugt als bürstenloser Elektromotor ausgebildet ist, treibt während eines Antritts durch den auf dem Skateboard 1 stehenden Fahrer das Skateboard 1 mit an. Zur Versorgung des Nabenmotors 3 ist hier beispielhaft ein Li-Ionenakku 5 vorgesehen, der besonders leicht zu vergleichbaren elektrischen Stromspeichern ist und eine vergleichsweise hohe Kapazität aufweist. Der elektrische Strom aus dem Li-Ionenakku 5 wird über eine Vorrichtung zur Motorkontrolle 6 mit Ein/Ausschalter 7 und Stufenschaltung 8 auf ein vorbestimmtes Leistungsniveau geschaltet. Die Vorderachse des Skateboards weist zwei nicht angetriebene Räder 10 und 11 auf, die beim Kippen der Standfläche 12 um eine schräg gestellte Achse 13, die zeichnerisch verborgen ist, und gedämpft durch einen Gummipuffer 14 drehen und dabei das elektrisch hilfsangetriebene Skateboard 1 eine Kurverfahrt ermöglichen. Als Nebenaggregat weist das elektrisch hilfsangetriebene Skateboard 1 eine Nachtfahrlampe 15 auf, die mit Hochleistungs-LED ausgestattet ist und dem Fahrer eine Sicht bei Dunkelheit ermöglicht.

Das erfindungsgemäße pedallose Tretfahrzeug grenzt sich vor allem durch seine Antriebsregelung von vergleichbaren pedallosen Tretfahrzeugen ab. Das hier vorgestellte pedallose Tretfahrzeug weist eine Trethilfe auf, die sich von einem aus dem Stand der Technik bekannten Antrieb dadurch unterscheidet, dass die Trethilfe nur während und kurzzeitig nach einem Antritt des Fahrers aktiv die fahrt unterstützt. Nachdem ein Antritt vorüber ist, treibt der Nabenmotor 3, geregelt durch die Regelungsvorrichtung 6, das Skateboard 1 nur noch für kurze Zeit an. Der Antrieb wird durch die Regelungsvorrichtung 6 dann ausgesetzt, wenn in einem ersten Betriebszustand die Geschwindigkeit des pedallosen Tretfahrzeuges, hier beispielhaft das Skateboard 1, die Geschwindigkeit bei 5 km/h oder darüber befindet. In einem weiteren Betriebszustand wird der Antrieb deaktiviert, wenn die Geschwindigkeit 25 km/h überschreitet. In einem noch weiteren Betriebszustand wird der Antrieb deaktiviert, wenn die Geschwindigkeit 45 km/h oder darüber beträgt. Die Deaktivierung des Hilfsantriebes, hier des Nabenmotors 3 findet aber nicht nur statt, wenn die Geschwindigkeit ein bestimmtes Maß überschreitet, sondern auch dann, wenn die Regelungsvorrichtung anhand von verschiedenen Alternativen oder kumulativen Sensoren den Stopp eines Antrittsvorganges durch den Fahrer detektiert.

In einer ersten Regelungsstrategie misst die Regelungsvorrichtung den durch den Nabenmotor 3 aufgenommen elektrischen Strom, der für die Leistungsabgabe repräsentativ ist. Bei einem erstmaligen Antreten wird der Nabenmotor 3 von einem neutralen Zustand in einen Generatorzustand überführt, weil der Antrittsvorgang den Nabenmotor 3 gegen eine anliegende elektrische Spannung antreibt. Dabei erzeugt der Nabenmotor 3 selbst elektrische Energie, die zum Nachladen des Li-Ionenakkus 5 genutzt wird. Die Regelungsvorrichtung misst in diesem Fall eine Flanke der elektrischen Leistungsaufnahme des Nabenmotors 3, weil diese negativ wird, also der Nabenmotor Strom liefert. Erkennend an der Flanke in der Leistungs-Zeit-Kurve schaltet die Regelungsvorrichtung 6 den Nabenmotor 3 unter elektrischen Strom. Dadurch treibt der Nabenmotor 3 das Skateboard an, wenn der Fahrer das Skateboard selbst durch Antreten beschleunigt. Damit das Skateboard 1 nicht unter dem Fuß des Fahrers wegfährt, wird die Leistungsabgabe in einem vorbestimmten Maß gesteigert. Innerhalb der Zeit der Leistungssteigerung hat der Fahrer die Möglichkeit, sein Gewicht so auf der Standfläche 12 zu verlagern, das die zusätzliche Antriebsenergie auch auf den Fahrer übergeht und er damit beschleunigt wird. Der Antrittsvorgang dauert je nach Geschwindigkeit der Fahrt nur einen Bruchteil einer Sekunde oder kann auch eine Sekunde oder länger dauern. Gerade in dieser kurzen Zeit muss er Nabenmotor 3 erhebliche Antriebsleistung zeigen, damit das Hilfsantriebskonzept zu einer befriedigenden Hilfsantriebsleistung führt. Der Nabenmotor 3 ist daher vergleichsweise leistungsstark ausgelegt und kann bei einem leichten Skateboard von 30 W über 150 W und bei leistungsstarken Skateboards bis deutlich über 1.000 W liegen. Straßenzulassungsfähige pedallose Tretfahrzeuge nach dem Gedanken der Erfindung sind mit einer Motorleistung von 250 W begrenzt. Die hohe Leistungsklasse ist für die Abgabe von impulsartigen Antriebsstößen notwendig, damit der Nabenmotor 3 mit hohem Drehmoment den Antrittsvorgang unterstützen kann. Um den Antrittsvorgang etwas nachhaltiger zu unterstützen, kann die Regelungsvorrichtung 6 auch vorsehen, dass bei der Detektion des Nachlassens der muskelbedingten Beschleunigung, was an einer typischen Steigerung der elektrischen Leistungsaufnahme des Nabenmotors 3 erkennbar ist, der Nabenmotor 3 noch für einen Bruchteil einer Sekunde bis einige Sekunden danach Antriebsenergie abgibt. Dabei kann vorgesehen sein, dass die elektrische Leistung während dieses "Nachschubs" asymptotisch oder linear abfällt. Die langsame Leistungssteigerung wie auch der langsame Leistungsabfall ist notwendig, damit ein Fahrer auf dem Skateboard balancieren kann. Würde der Motor einfach nur ein- und wieder ausgeschaltet werden, so bestünde gerade bei leistungsstarken elektrischen Hilfsantrieben die Gefahr, dass das leichtere Skateboard unter dem Fuß des Fahrers ein empfundenes Eigenleben entwickelt und dabei den Fahrer regelrecht abwirft.

Die Strategie des Regelungsvorganges kann auf die Detektion des Stromaufnahmeverhaltens des Nabenmotors 3 reduziert sein, aber es ist auch möglich, dass weitere Sensoren den Antrittsvorgang detektieren. Neben der typischen abfallenden Flanke im Strom-Zeit-Diagramm beim Antreten kann auch ein trägheitsgebundener Beschleunigungssensor den Beginn und das Ende eines Antrittsvorganges detektieren. In diesem Fall detektiert der Beschleunigungssensor ein plötzliches Beschleunigen des Skateboards ohne dass hierfür eine entsprechende Stromaufnahme des elektrischen Hilfsmotors vorliegt. Diese zusätzliche Beschleunigung kann in diesem Fall einem Antrittsvorgang zugeordnet werden. Um zu vermeiden, dass andere beschleunigende Ereignisse den elektrischen Hilfsantrieb, hier Nabenmotor 3 einschalten, wie beispielsweise die Fahrt auf abschüssigem Gelände oder ein kurzes Abheben des Motors bei Sprüngen, kann des Weiteren vorgesehen sein, dass nur Beschleunigungsvorgänge einer bestimmten Größe oder eines plötzlichen Einsetzens als Antrittsvorgang interpretiert werden.

Um Antrittsvorgänge mit dem Fuß sicher von anderen beschleunigenden Ereignissen unterscheiden zu können, kann nach dem Gedanken der Erfindung des Weiteren vorgesehen sein, dass ein Sensor den links oder rechts an der Standfläche 12 vorbeiziehenden Fuß detektiert. Die elektrische Trethilfe stößt das Skateboard nur dann vorwärts, wenn sicher von einer Antrittsbewegung des Fahrers ausgegangen werden kann.

In Figur 2 ist ein zum Skateboard in Figur 1 nahezu identisches Kickboard 20 abgebildet, welches auf der Standfläche 12 einen Handgriff 16 aufweist.

**BEZUGSZEICHENLISTE**

| | | | |
|---|---|---|---|
| 1 | Skateboard | 10 | Rad |
| 2 | Rad | 11 | Rad |
| 3 | Nabenmotor | 12 | Standfläche |
| 4 | Gummiprofil | 13 | Achse |
| 5 | Li-Ionen-Akku | 14 | Gummipuffer |
| 6 | Vorrichtung zur Motorkontrolle | 15 | Nachtfahrlampe |
| | | 16 | Handgriff |
| 7 | Ein/Ausschalter | 20 | Kickboard |
| 8 | Stufenschaltung | | |

## Patentansprüche

1. Pedalloses Tretfahrzeug (1, 20),
**dadurch gekennzeichnet, dass**
eine elektrische Trethilfe in Form eines elektrischen Hilfsantriebes (3) vorgesehen ist, der sich selbsttätig nur für eine vorbestimmte Zeit mit einer vorbestimmten Leistungsabgabe zur Antriebshilfe dazuschaltet.

2. Pedalloses Tretfahrzeug nach Anspruch 1,
**dadurch gekennzeichnet, dass**
das auslösende Moment für das Dazuschalten mindestens einer der folgenden Mess- oder Detektionsparameter ist:
a) die Änderung des aktuellen Drehmoments des elektrischen Hilfsantriebes,
b) die Änderung des der aktuellen elektrischen Leistungsaufnahme des elektrischen Hilfsantriebes,
c) die aktuelle Geschwindigkeit,
d) die Änderung der aktuellen Beschleunigung, als das aktuelle Ruckmoment, das einen bestimmten Wert erreicht,
e) die Detektion eines Antrittsvorganges durch den Fahrer.

3. Pedalloses Tretfahrzeug nach Anspruch 1,
**dadurch gekennzeichnet, dass**
eine Vorrichtung zur Motorkontrolle (6) eines elektrischen Hilfsantriebes (3) zur Trethilfe vorgesehen ist, welche
- den elektrischen Hilfsantrieb (3) nur innerhalb eines vorbestimmten Geschwindigkeitsfensters, das vorzugsweise zwischen 5 km/h und 45 km/h liegt, bevorzugt zwischen 6 km/h und 25 km/h liegt, zur Abgabe einer Minderleistung mit konstantem Drehmoment regelt, das vorzugsweise zwischen 20 N und 50 N, bevorzugt zwischen 35 N und 45 N liegt, und wobei die Minderleistung unter normalen Bedingungen nicht reicht, eine Mindestgeschwindigkeit aufrechtzuerhalten, und
- welche bei Stopp, Geschwindigkeiten unterhalb des Geschwindigkeitsfensters und bei Geschwindigkeiten oberhalb des Geschwindigkeitsfensters den elektrischen Hilfsantrieb (3) ausschaltet.

4. Pedalloser Tretfahrzeug nach Anspruch 1,
**dadurch gekennzeichnet, dass**
eine Vorrichtung zur Motorkontrolle (6) eines elektrischen Hilfsantriebes (3) zur Trethilfe vorgesehen ist, welche
- den elektrischen Hilfsantrieb (3) nur innerhalb eines vorbestimmten Geschwindigkeitsfensters, das vorzugsweise zwischen 5 km/h und 45 km/h liegt, bevorzugt zwischen 6 km/h und 25 km/h liegt, mit einem bauart bedingten, begrenzten Drehmoment einschaltet, wobei das Drehmoment vorzugsweise zwischen 20 N und 50 N liegt, und wobei das Drehmoment unter normalen Bedingungen nicht reicht, eine Mindestgeschwindigkeit aufrechtzuerhalten, und
- welche bei Stopp, Geschwindigkeiten unterhalb des Geschwindigkeitsfensters und bei Geschwindigkeiten oberhalb des Geschwindigkeitsfensters den elektrischen Hilfsantrieb (3) ausschaltet.

5. Pedalloses Tretfahrzeug nach Anspruch 1,
**dadurch gekennzeichnet, dass**
eine Vorrichtung zur Motorkontrolle (6) eines elektrischen Hilfsantriebes (3) zur Trethilfe vorgesehen ist, welche
- den elektrischen Hilfsantrieb (3) nur innerhalb eines vorbestimmten Geschwindigkeitsfensters, das vorzugsweise zwischen 5 km/h und 45 km/h liegt, bevorzugt zwischen 6 km/h und 25 km/h liegt, zur Abgabe einer Minimalleistung mit konstanter Geschwindigkeit regelt, die unter normalen Bedingungen gerade ausreicht reicht, eine Mindestgeschwindigkeit aufrechtzuerhalten, und
- welche bei Stopp, Geschwindigkeiten unterhalb des Geschwindigkeitsfensters und bei Geschwindigkeiten oberhalb des Geschwindigkeitsfensters den elektrischen Hilfsantrieb (3) ausschaltet, und
- welche den elektrischen Hilfsantrieb (3) nur für eine vorbestimmte Zeit oder für eine berechnete oder vorbestimmte Wegstrecke aktiviert.

6. Pedalloses Tretfahrzeug nach Anspruch 5,
**dadurch gekennzeichnet, dass**
eine Vorrichtung zur Motorkontrolle (6) vorgesehen ist, welche bei einer vorgegebenen Mindestgeschwindigkeit einen Antriebszyklus startet, in welchem die Vorrichtung zur Motorkontrolle (6) einen elektrischen Hilfsantrieb (3) für eine vorbestimmte Zeit ein und nach Ablauf der Zeit wieder ausschaltet, wobei
innerhalb der eingeschalteten Zeit der elektrische Hilfsantrieb (3) durch die Vorrichtung zur Motorkontrolle (6) das Anfangsgeschwindigkeitsniveau aufrecht hält, welches beim Einschalten des elektrischen Hilfsantriebes (3) vorlag, und
sofern sich die Geschwindigkeit des pedallosen Tretfahrzeuges (1, 20) während eines Antriebszyklus erhöht, wie beispielsweise durch ein Antreten durch den Fahrer, die Vorrichtung zur Motorkontrolle (6) einen erneuten Antriebszyklus startet, welcher jedoch mit der erhöhten Anfangsgeschwindigkeit erfolgt, wobei bei Erreichen einer vorgegebenen Maximalgeschwindigkeit des pedallosen Tretfahrzeuges (1, 20) die Vorrichtung zur Motorkontrolle (6) den Hilfsantrieb (3) ausschaltet und nicht wieder einschaltet, solange die vorgegebene Maximalgeschwindigkeit überschritten ist, und
sofern sich die Geschwindigkeit erst nach Ablauf eines Antriebszyklus zunächst verringert, dann aber wieder erhöht, wie beispielsweise durch ein Antreten durch den Fahrer nachdem der elektrische Hilfsantrieb (3) ausgeschaltet wurde, die Vorrichtung zur Motorkontrolle (6) einen erneuten Antriebszyklus startet, welcher jedoch mit der Geschwindigkeit erfolgt, die nach der anfänglichen Verringerung der Geschwindigkeit vorlag.

7. Pedalloses Tretfahrzeug nach Anspruch 1,
**dadurch gekennzeichnet, dass**
eine Vorrichtung zur Motorkontrolle (6) eines elektrischen Hilfsantriebes (3) zur Trethilfe vorgesehen ist, welche
- den elektrischen Hilfsantrieb (3) nur innerhalb eines vorbestimmten Geschwindigkeitsfensters, das vorzugsweise zwischen 5 km/h und 45 km/h liegt, bevorzugt zwischen 6 km/h und 25 km/h liegt, zur Abgabe einer ausreichenden Leistung mit konstanter Beschleunigung regelt, die unter normalen Bedingungen ausreicht reicht, das pedallose Tretfahrzeug mitsamt Fahrer zu beschleunigen, und
- welche bei Stopp, Geschwindigkeiten unterhalb des Geschwindigkeitsfensters und bei Geschwindigkeiten oberhalb des Geschwindigkeitsfensters den elektrischen Hilfsantrieb (3) ausschaltet, und
- welche elektrischen Hilfsantrieb nur für eine vorbestimmte Zeit oder für eine berechnete oder vorbestimmte Wegstrecke aktiviert.

8. Pedalloses Tretfahrzeug nach Anspruch 7,
**dadurch gekennzeichnet, dass**
eine Vorrichtung zur Motorkontrolle (6) eines elektrischen Hilfsantriebes (3) zur Trethilfe vorgesehen ist, welche
als Eingangsgröße die Stromaufnahme des elektrischen Hilfsantriebes (3) und als Regelgröße die Motorleistung des elektrischen Hilfsmotors aufweist,
wobei bei einer detektierten negativen Flanke der Stromaufnahme die Vorrichtung zur Vorrichtung zur Motorkontrolle (6) des elektrischen Hilfsantriebes (3) herauf setzt
bis eine gemessene Geschwindigkeit des pedallosen Tretfahrzeuges eine vorbestimmte Geschwindigkeit erreicht hat, und/oder bis die Motorleistung des pedallosen Tretfahrzeuges einen vorbestimmten Wert erreicht hat,
wobei bei Erreichen der vorbestimmten Geschwindigkeit und/oder der vorbestimmten Motorleistung die Vorrichtung zur Motorkontrolle (6) die Motorleistung des elektrischen Hilfsantriebes (3) reduziert oder stoppt gemäß einem vorbestimmten Profil,
wobei das Profil durch eine Bremsbeschleunigung von weniger als 3 m/s² so bemessen ist, dass die Leistungsreduktion oder das Stoppen des elektrischen Hilfsantriebes (3) den Fahrer nicht aus dem Gleichgewicht bringt.

9. Pedalloses Tretfahrzeug nach Anspruch 7,
**dadurch gekennzeichnet, dass**
eine Vorrichtung zur Detektion eines vorbeiziehenden Fußes vorgesehen ist, wobei die Vorrichtung zur Detektion den vorbeiziehenden Fuß an der Stelle detektiert, wo der vorbeiziehende Fuß bei einem normalen Antrittsvorgang vorbeizieht,
wobei bei Detektion eines vorbeiziehenden Fußes eine Vorrichtung zur Motorkontrolle (6) die Motorleistung des elektrischen Hilfsantriebes (3) herauf setzt
bis eine gemessene Geschwindigkeit des pedallosen Tretfahrzeuges eine vorbestimmte Geschwindigkeit erreicht hat, und/oder
bis die Motorleistung des pedallosen Tretfahrzeuges (1, 20) einen vorbestimmten Wert erreicht hat,
wobei bei Erreichen der vorbestimmten Geschwindigkeit und/oder der vorbestimmten Motorleistung die Vorrichtung zur Motorkontrolle (6) die Motorleistung des elektrischen Hilfsantriebes (3) reduziert oder stoppt gemäß einem vorbestimmten Profil,
wobei das Profil durch eine Bremsbeschleunigung von weniger als 3 m/s² so bemessen ist, dass die Leistungsreduktion oder das Stoppen des elektrischen Hilfsantriebes (3) den Fahrer nicht aus dem Gleichgewicht bringt.

10. Pedalloses Tretfahrzeug nach Anspruch 7,
**dadurch gekennzeichnet, dass**
eine Vorrichtung zur Messung der Beschleunigung des pedallosen Tretfahrzeuges (1, 20) vorgesehen ist, welche bei Detektion einer positiven Flanke der Beschleunigung, das bedeutet, das Ruckmoment (die differentielle Änderung der Beschleunigung nach der Zeit) ist positiv, eine Vorrichtung zur Leistungsregelung die Motorleistung elektrischen Hilfsantriebes (3) herauf setzt
bis eine gemessene Geschwindigkeit des pedallosen Tretfahrzeuges eine vorbestimmte Geschwindigkeit erreicht hat, und/oder bis die Motorleistung des pedallosen Tretfahrzeuges einen vorbestimmten Wert erreicht hat,
wobei bei Erreichen der vorbestimmten Geschwindigkeit und/oder der vorbestimmten Motorleistung die Vorrichtung zur Leistungsregelung die Motorleistung des elektrischen Hilfsantriebes (3) reduziert oder stoppt gemäß einem vorbestimmten Profil,
wobei das Profil durch eine Bremsbeschleunigung von weniger als 3 m/s² so bemessen ist, dass die Leistungsreduktion oder das Stoppen des elektrischen Hilfsantriebes (3) den Fahrer nicht aus dem Gleichgewicht bringt.

11. Pedalloses Tretfahrzeug nach einem der Ansprüche 1 bis 10,
**dadurch gekennzeichnet, dass**
bei Überschreiten einer vorbestimmten Geschwindigkeit eine Vorrichtung den elektrischen Hilfsantrieb (3) zur Tretunterstützung in einen Generatorbetrieb umstellt und die abgegebene elektrische Leistung des elektrischen Hilfsantriebes (3) in eine an Bord befindliche Vorrichtung zur Speicherung elektrischen Stroms leitet.

12. Pedalloses Tretfahrzeug nach einem der Ansprüche 1 bis 11,
**dadurch gekennzeichnet dass**
ein Quickstopp in Form eines auf einer Standfläche vorhandenen Druckschalters vorgesehen ist, der bei Entlastung die Motorleistung des elektrischen Hilfsantriebes (3) abrupt stoppt und in einen Bremsbetrieb umstellt.

13. Pedalloses Tretfahrzeug nach einem der Ansprüche 1 bis 12,
**dadurch gekennzeichnet, dass**
eine Stufenschaltung vorgesehen ist, mit welcher der Grad der Tretunterstützung vorgewählt werden kann.

14. Pedalloses Tretfahrzeug, nach einem der Ansprüche 1 bis 13,
**dadurch gekennzeichnet, dass**
eine kabelgebundene oder drahtlose Fernbedienung vorgesehen ist, mit welcher sowohl die Motorleistung des elektrischen Hilfsantriebes (3) wie auch eine Bremse steuerbar ist.

15. Pedalloses Tretfahrzeug nach einem der Ansprüche 1 bis 14,
**dadurch gekennzeichnet, dass**
eine Vorrichtung zur Detektion des Straßenkontaktes zwischen mindestens einem Antriebsrad und dem Untergrund bei Verlust des mindestens einen Antriebsrades mit dem Untergrund den elektrischen Hilfsantrieb (3) stromlos schaltet.
